# EUROPEAN PATENT APPLICATION

(11) **EP 4 502 460 A1**
(43) Date of publication of application: **05.02.2025**
(21) Application number: 23779939.0
(22) Date of filing: 22.03.2023
(51) Int. Cl.: F21S 45/00, F21V 23/00, F21W 103/10, F21Y 115/10

(54) **VEHICULAR LAMP**

(30) Priority: 31.03.2022 JP 2022059252
(71) Applicant: Koito Manufacturing Co., Ltd., Tokyo 141-0001 (JP)
(72) Inventor: TADA Shohei, Shizuoka-shi, Shizuoka 424-8764 (JP)
(74) Representative: Hoffmann Eitle
(86) International application number: PCT/JP2023/011179
(87) International publication number: WO 2023/189927

(57) **Abstract**

A vehicular lamp (100) includes a plurality of lamp units (51), each of the plurality of lamp units (51) including a light emitting element (13), a lens (10) disposed on a front side relative to the light emitting element (13), and a body (11) supporting the light emitting element (13). The body (11) of at least one of the plurality of lamp units (51) includes a coupling portion (22) configured to couple the body (11) of the at least one of the lamp units (51) with the body (11) of another one of the lamp units (51).

## Description

### TECHNICAL FIELD

The present disclosure relates to a vehicular lamp to be mounted on a vehicle.

Techniques relating to a vehicular lamp are being developed in the related art. For example, a vehicular lamp disclosed in Patent Literature 1 is a front lamp for a two-wheeled vehicle, which includes first and second lamp units arranged side by side in a left-right direction, and a panel member surrounding the first and second lamp units. Lenses of the first and second lamp units are formed in a convex shape along a surface contour of the panel member.

### CITATION LIST

### PATENT LITERATURE

Patent Literature 1: JP2015-076364A

### SUMMARY OF INVENTION

### TECHNICAL PROBLEM

In the technique described in Patent Literature 1, when the front lamp for a two-wheeled vehicle is attached to the vehicle, the first and second lamp units are separately attached to the panel member, and the panel member to which the first and second lamp units are attached is attached to the vehicle.

An object of the present disclosure is to provide a vehicular lamp that can further facilitate work when attaching a vehicular lamp to a vehicle.

### SOLUTION TO PROBLEM

A vehicular lamp according to an aspect of the present disclosure is a vehicular lamp configured to be mounted on a vehicle, the vehicular lamp including a plurality of lamp units, each of the plurality of lamp units including a light emitting element, a lens disposed on a front side relative to the light emitting element, and a body supporting the light emitting element. The body of at least one of the plurality of lamp units includes a coupling portion configured to couple the body of the at least one of the plurality of lamp units with the body of another one of the plurality of lamp units.

### ADVANTAGEOUS EFFECTS OF INVENTION

According to the present disclosure, it is possible to further facilitate work when attaching a vehicular lamp to a vehicle.

### BRIEF DESCRIPTION OF DRAWINGS

[FIG. 1] FIG. 1 is a front perspective view illustrating configurations of a vehicular lamp according to an embodiment of the present disclosure.
[FIG. 2] FIG. 2 is an exploded perspective view illustrating detailed configurations of a right lamp unit illustrated in FIG. 1.
[FIG. 3] FIG. 3 is a back perspective view illustrating a state in which two lamp units illustrated in FIG. 1 are coupled.
[FIG. 4] FIG. 4 illustrates a configuration of a body provided in the left lamp unit illustrated in FIG. 3.
[FIG. 5] FIG. 5 illustrates a configuration of a body provided in the right lamp unit illustrated in FIG. 3.

### DESCRIPTION OF EMBODIMENTS

### Overall Schematic Configurations

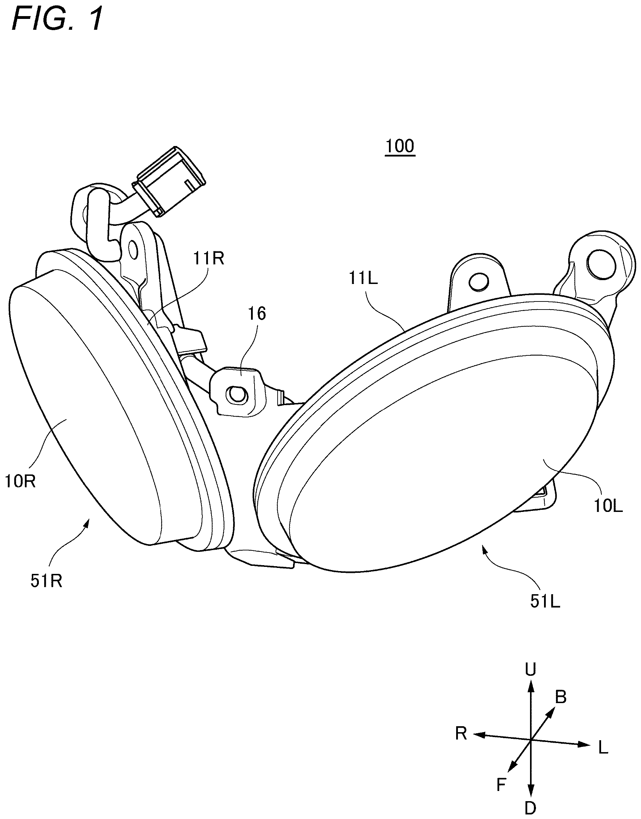

The present disclosure will be described with reference to the drawings. FIG. 1 is a front perspective view illustrating configurations of a vehicular lamp according to an embodiment of the present disclosure.

Referring to FIG. 1, a vehicular lamp 100 is a front lamp such as a clearance lamp to be mounted on a vehicle such as a motorcycle. In this example, a direction of an arrow F illustrated in FIG. 1 is "front", and a direction of an arrow B is "rear". A direction of an arrow R illustrated in FIG. 1 is "right", and a direction of an arrow L is "left". A direction of an arrow U illustrated in FIG. 1 is "upper", and a direction of an arrow D is "lower".

The vehicular lamp 100 includes a plurality of lamp units 51. In this example, a case in which the vehicular lamp 100 includes a left lamp unit 51L and a right lamp unit 51R, which are two lamp units 51 arranged in a left-right direction, will be described. For example, the left lamp unit 51L is provided on a left side in the left-right direction, and the right lamp unit 51R is provided on a right side in the left-right direction.

The left lamp unit 51L and the right lamp unit 51R may be coupled. The left lamp unit 51L and the right lamp unit 51R have different orientations of light emitting surfaces when attached to a vehicle. Specifically, the light emitting surface of the left lamp unit 51L faces leftward rather than forward. On the other hand, the light emitting surface of the right lamp unit 51R faces rightward rather than forward.

The left lamp unit 51L includes a light emitting element to be described later, an outer lens (lens) 10L disposed on a front side relative to the light emitting element, and a body 11L supporting the light emitting element. The right lamp unit 51R includes a light emitting element to be described later, an outer lens (lens) 10R disposed on a front side relative to the light emitting element, and a body 11R supporting the light emitting element.

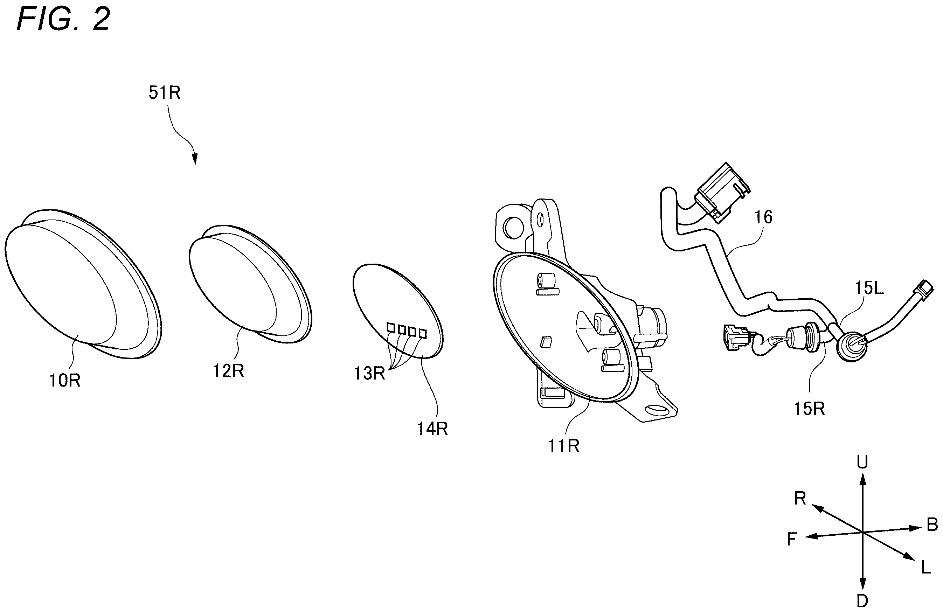

FIG. 2 is an exploded perspective view illustrating detailed configurations of a right lamp unit illustrated in FIG. 1. Referring to FIG. 2, the right lamp unit 51R further includes, in addition to the outer lens 10R and the body 11R, an inner lens 12R, light emitting elements 13R, a substrate 14R supporting the light emitting elements 13, and a cord 15R for supplying power to the light emitting elements 13R.

In addition to the outer lens 10R, the inner lens 12R, the light emitting elements 13R, the substrate 14R, and the cord 15R of the right lamp unit 51R, FIG. 2 further illustrates a cord 15L of the right lamp unit 51R and a wiring component 16 for wiring the cords 15R and 15L.

The left lamp unit 51L has the same configurations as the right lamp unit 51R except for a configuration of the body 11L. The left lamp unit 51L includes, in addition to the outer lens 10L and the body 11L, an inner lens 12L, light emitting elements 13L, and a substrate 14L, which are not illustrated, and the above-described cord 15L.

Hereinafter, each of the inner lenses 12R and 12L is also referred to as an "inner lens 12". Each of the light emitting elements 13R and 13L is also referred to as a "light emitting element 13". Each of the substrates 14R and 14L is also referred to as a "substrate 14". Each of the cords 15R and 15L is also referred to as a "cord 15". Each of the outer lenses 10R and 10L is also referred to as an "outer lens 10". Each of the bodies 11R and 11L is also referred to as a "body 11".

The inner lens 12 is provided between the outer lens 10 and the light emitting element 13, and refracts light from the light emitting element 13.

The light emitting element 13 is, for example, a white light emitting diode, and has a rectangular light emitting surface. The light emitting surface of the light emitting element 13 is provided on a front side, and a rear surface of the light emitting element 13 is supported by the substrate 14. The substrate 14 is supported by the body 11.

The plurality of lamp units 51 are not limited to the configuration in which the orientations of the light emitting surfaces are different from each other when attached to the vehicle, and the orientations of the light emitting surfaces of the lamp units 51 may be the same as each other. The vehicular lamp 100 is not limited to a clearance lamp, and may be another type of lamp.

As illustrated in FIG. 1, the plurality of lamp units 51 are not limited to the configuration in which the lamp units 51 are arranged in the left-right direction when attached to the vehicle, and may be arranged in an upper-lower direction, for example.

The cords 15L and 15R are not limited to the configuration of being wired by the common wiring component 16, and may be wired by wiring components different from each other.

### Details of Left Lamp Unit and Right Lamp Unit

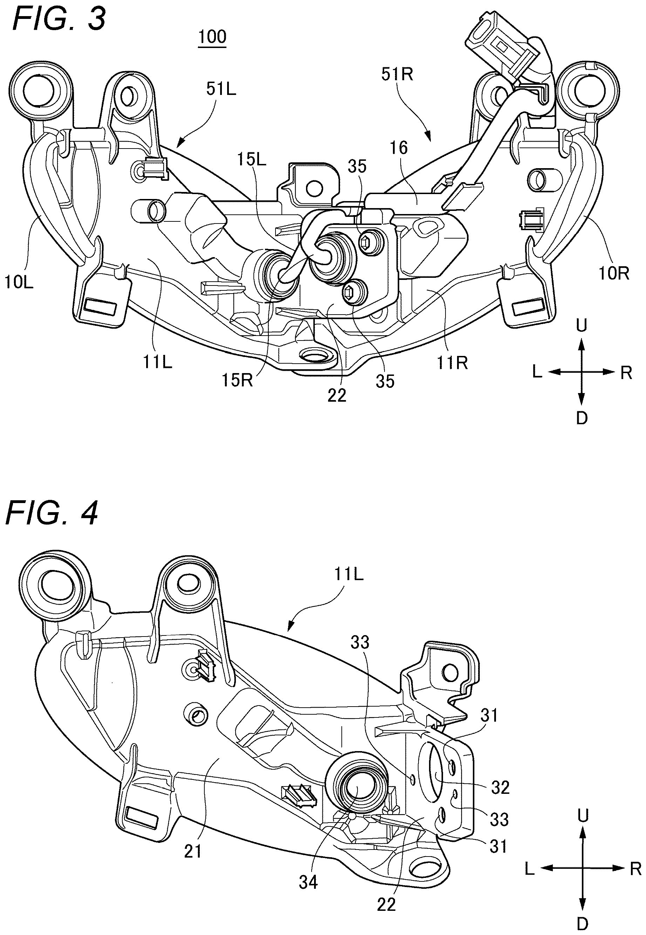

FIG. 3 is a back perspective view illustrating a state in which two lamp units illustrated in FIG. 1 are coupled. FIG. 4 illustrates a configuration of a body provided in the left lamp unit illustrated in FIG. 3.

Referring to FIGS. 3 and 4, the body 11L of the left lamp unit 51L includes a support portion 21 that supports the substrate 14 and a coupling portion 22 that couples the body 11L and the body 11R. The coupling portion 22 is a plate-shaped member protruding rearward from a right end portion of the support portion 21, and is in contact with a rear surface of the body 11R of the right lamp unit 51R when the left lamp unit 51L and the right lamp unit 51R are coupled.

As illustrated in FIG. 4, the coupling portion 22 has a plurality of holes 31 into which a plurality of fixing members 35 illustrated in FIG. 3 are respectively inserted and a hole 32 into which the cord 15R illustrated in FIG. 3 is inserted. The coupling portion 22 further has a plurality of holes 33 into which a plurality of positioning pins to be described later are respectively inserted. The support portion 21 has a hole 34 into which the cord 15L illustrated in FIG. 3 is inserted.

The coupling portion 22 is not limited to the configuration provided in the left lamp unit 51L, and may be provided in the right lamp unit 51R, or in both the left lamp unit 51L and the right lamp unit 51R. When the coupling portion 22 is provided in both the left lamp unit 51L and the right lamp unit 51R, the left lamp unit 51L and the right lamp unit 51R may have the same configuration or different configurations.

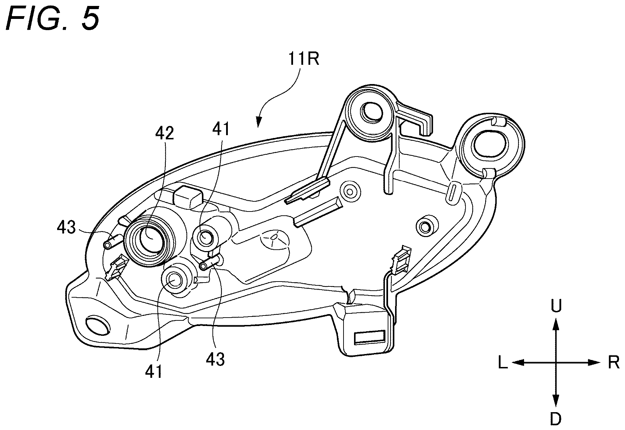

FIG. 5 illustrates a configuration of a body provided in the right lamp unit illustrated in FIG. 3. Referring to FIGS. 3 to 5, when the left lamp unit 51L and the right lamp unit 51R are coupled, the body 11R has a plurality of holes 41 provided in positions corresponding to the plurality of holes 31 illustrated in FIG. 4 and a hole 42 provided in a position corresponding to the hole 32 illustrated in FIG. 4.

The body 11R is provided with a plurality of positioning pins 43 in positions corresponding to the plurality of holes 33 illustrated in FIG. 4 when the left lamp unit 51L and the right lamp unit 51R are coupled.

The coupling portion 22 may be in contact with a front surface of the body 11R of the right lamp unit 51R. However, when the coupling portion 22 is in contact with the rear surface of the body 11R, the coupling portion 22 can be prevented from being seen through the outer lens 10 in a front view of the vehicular lamp 100. In this case, the two lamp units 51 can be coupled by effectively utilizing a space on a rear side different from an emission side of light from the light emitting element 13. For this reason, the coupling portion 22 is preferably in contact with the rear surface of the body 11R.

The coupling portion 22 of the lamp unit 51 is not limited to a plate-shaped member that is in contact with a surface of the body 11 of another lamp unit 51, and may be, for example, a linear member.

The vehicular lamp 100 may include three or more lamp units 51. In this case, the body 11 of at least one or two of the three or more lamp units 51 includes the coupling portion 22 configured to couple the body of the at least one or two of the three or more lamp units 51 with the body 11 of another lamp unit 51.

### Assembly of Vehicular Lamp

Referring again to FIG. 2, when the right lamp unit 51R is assembled, the substrate 14R, to which the light emitting element 13R is attached, and the inner lens 12R are attached to the body 11R. Thereafter, the outer lens 10R is attached to the body 11R. The body 11R and the outer lens 10R are bonded by hot plate welding using, for example, a fixture. The same work is also performed when the left lamp unit 51L is assembled. Accordingly, assembly of the left lamp unit 51L and the right lamp unit 51R is completed.

Thereafter, as illustrated in FIGS. 3 to 5, the plurality of positioning pins 43 of the right lamp unit 51R are respectively inserted into the plurality of holes 33 of the left lamp unit 51L, so that the coupling portion 22 of the left lamp unit 51L is in contact with the body 11R of the right lamp unit 51R. Thereafter, the fixing member 35 is inserted into the hole 31 of the left lamp unit 51L and the hole 41 of the right lamp unit 51R corresponding to the hole 31. Accordingly, the left lamp unit 51L and the right lamp unit 51R can be coupled.

The fixing member 35 is, for example, a screw having a screw head of a special shape such as a star shape. Fastening such screws in a plurality of positions can improve durability against vibration or the like of the vehicle.

After the left lamp unit 51L and the right lamp unit 51R are coupled, for example, the wiring component 16 is attached to the right lamp unit 51R. At this time, both of the cords 15L and 15R are preferably inserted into the wiring component 16 with end portions thereof exposed to outside of the wiring component 16.

Thereafter, for example, the end portion of the cord 15L is inserted into the hole 34 of the left lamp unit 51L and connected to the substrate 14L. The end portion of the cord 15R is inserted into the hole 32 of the coupling portion 22 of the left lamp unit 51L and the hole 42 of the right lamp unit 51R and connected to the substrate 14R. The vehicular lamp 100 assembled in this manner is attached to a member such as a panel (not illustrated) provided in a front portion of the vehicle.

As described above, the vehicular lamp 100 according to the embodiment of the present disclosure includes a plurality of lamp units 51 each including the light emitting element 13, the outer lens 10 disposed on the front side relative to the light emitting element 13, and the body 11 supporting the light emitting element 13. The body 11 of at least one of the plurality of lamp units 51 includes the coupling portion 22 that couples the body 11 of the at least one of the plurality of lamp units 51 with the body 11 of another lamp unit 51.

In this manner, since the body 11 of the lamp unit 51 includes the coupling portion 22 configured to couple the body 11 of the lamp unit 51 with the body 11 of another lamp unit 51, the plurality of lamp units 51 can be integrally attached to a member such as a panel. Accordingly, work when attaching the vehicular lamp 100 to the vehicle can be further facilitated.

The outer lens 10 and the body 11 are bonded by hot plate welding using, for example, a fixture. When the plurality of lamp units 51 are integrally formed from a beginning, the fixture for welding the outer lens 10 and the body 11 by hot plate welding has a large size and a complicated shape. In contrast, as described above, since the plurality of lamp units 51 are separate from each other and coupled via the coupling portion 22, the outer lens 10 and the body 11 can be welded for each lamp unit 51 by hot plate welding, and it is possible to implement a reduced size and a simplified shape of the fixture used for hot plate welding.

In the vehicular lamp 100 according to the embodiment of the present disclosure, the coupling portion 22 is a plate-shaped member that is in contact with a surface of another body 11 when the body 11 including the coupling portion 22 and the other body 11 are coupled. In this manner, since the coupling portion 22 of the body 11 and the other body 11 are coupled in a surface contact state, a plurality of bodies 11 can be coupled firmly.

The vehicular lamp 100 according to the embodiment of the present disclosure further includes the cord 15 that supplies power to the light emitting element 13 for each lamp unit 51. The cord 15 of each lamp unit 51 is wired by the common wiring component 16. With such a configuration, the number of components of the wiring component 16 can be reduced, and a reduced space can be achieved.

In the vehicular lamp 100 according to the embodiment of the present disclosure, the orientations of the light emitting surfaces of the light emitting elements 13 of the respective lamp units 51 differ from one another in a state in which the lamp units 51 are attached to the vehicle.

Here, as described above, when the plurality of lamp units 51 are integrally formed from a beginning, the fixture for welding the outer lens 10 and the body 11 by hot plate welding has a large size and a complicated shape. When the orientations of the light emitting surfaces of the light emitting elements 13 of the respective lamp units 51 differ from one another in a state in which the lamp units 51 are attached to the vehicle, the shape of the fixture is further complicated.

In contrast, since the plurality of lamp units 51 are separated from each other as described above, the outer lens 10 and the body 11 can be welded by hot plate welding for each lamp unit 51, which is particularly effective when the light emitting surfaces of the light emitting elements 13 of the respective lamp units 51 differ from one another.

Although the embodiment of the present disclosure is described above, it is needless to say that the technical scope of the present disclosure should not be construed as being limited by the description of the embodiment. It should be understood by a person skilled in the art that the present embodiment is merely an example, and that various modifications of the embodiment are possible within the scope of the inventions described in the claims. The technical scope of the present disclosure is determined based on the scope of the inventions described in the claims and an equivalent scope thereof.

The present application is based on a Japanese patent application No. 2022-059252 filed on March 31, 2022, and contents thereof are incorporated herein by reference.

## Claims

1. A vehicular lamp configured to be mounted on a vehicle, the vehicular lamp comprising:
a plurality of lamp units, each of the plurality of lamp units comprising a light emitting element, a lens disposed on a front side relative to the light emitting element, and a body supporting the light emitting element,
wherein the body of at least one of the plurality of lamp units comprises a coupling portion configured to couple the body of the at least one of the plurality of lamp units with the body of another one of the plurality of lamp units.

2. The vehicular lamp according to claim 1, wherein the coupling portion is a plate-shaped member configured to contact a surface of another body in a state in which the body comprising the coupling portion is coupled with the another body.

3. The vehicular lamp according to claim 1 or 2, further comprising:
a cord configured to supply power to the light emitting element for each of the lamp units,
wherein the cord of each of the lamp units is wired by a common wiring component.

4. The vehicular lamp according to any one of claims 1 to 3, wherein orientations of light emitting surfaces of light emitting elements of the respective lamp units differ from one another in a state in which the lamp units are attached to the vehicle.
